(19) Europäisches Patentamt
European Patent Office
Office européen des brevets

(11) Veröffentlichungsnummer: **0 281 159 B1**

(12) **EUROPÄISCHE PATENTSCHRIFT**

(45) Veröffentlichungstag der Patentschrift: **31.07.91**

(51) Int. Cl.$^5$: **B64D 17/56**, B64D 17/62

(21) Anmeldenummer: **88103414.4**

(22) Anmeldetag: **05.03.88**

# (54) Luftdruckabhängige Auslösevorrichtung für einen Fallschirm.

(30) Priorität: **06.03.87 DE 3707294**

(43) Veröffentlichungstag der Anmeldung:
**07.09.88 Patentblatt 88/36**

(45) Bekanntmachung des Hinweises auf die Patenterteilung:
**31.07.91 Patentblatt 91/31**

(84) Benannte Vertragsstaaten:
**AT BE CH DE ES FR GB IT LI NL**

(56) Entgegenhaltungen:
**GB-A- 2 032 860**
**US-A- 3 547 383**
**US-A- 4 227 663**
**US-A- 4 527 758**

(73) Patentinhaber: **Cloth, Helmut**
**Riemkestrasse 97a**
**W-4790 Paderborn(DE)**

(72) Erfinder: **Cloth, Helmut**
**Riemkestrasse 97a**
**W-4790 Paderborn(DE)**

(74) Vertreter: **Hanewinkel, Lorenz, Dipl.-Phys.**
**Patentanwalt Ferrariweg 17a**
**W-4790 Paderborn(DE)**

**EP 0 281 159 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Auslösevorrichtung gemäß dem Oberbegriff des Anspruchs 1.

Aus US-A-4,227,663 ist eine Auslösevorrichtung für einen Fallschirm bekannt, der im gebrauchsfertigen Zustand in einem Rucksack eingefaltet angeordnet ist und durch eine Sicherungsschnur gegen eine Federspannung einer Entfaltungsfeder zusammengehalten ist und wobei die Sicherungsschnur mit der Auslösevorrichtung verbunden ist, die durch einen barometrischen Höhenmesser bei Erreichen eines voreinstellbaren Luftdrucks ausgelöst wird, wobei in oder an dem Rucksack eine Trennvorrichtung für die Sicherungsschnur angeordnet ist, die durch ein elektrisches Steuersignal von einer batteriegespeisten, elektronischen Steuervorrichtung durch zeitabhängige Auswertung von Luftdrucksignalen eines elektronischen Luftdrucksensors gesteuert auslösbar ist. Bei dieser bekannten Auslösevorrichtung wird das elektrische Ausgangssignal des Drucksensors unmittelbar mit einem über ein entsprechend der gewünschten Auslösehöhe einzustellendes Widerstandsnetzwerk erzeugten Vergleichswert verglichen, bei dessen Erreichen das Auslösesignal abgegeben wird. Die Glättung der elektrischen Drucksensorsignale erfolgt durch einen RC-Glied-Tiefpaß, was nur deshalb ausreichend ist, weil die Vorrichtung erst beim Abwurf der Last mit dem Fallschirm zu aktivieren ist. Eine derartige späte Aktivierung ist aber für ein Sicherheitsauslösesystem unzureichend, da sie vergessen werden kann. Auch bei der Höheneinstellung kann leicht ein Bedienungsfehler vorkommen. Als Auslöser ist ein elektrisch zu zündender Detonator vorgesehen, der mit einem Schneidbolzen die Auslöseschnur durchtrennt.

Weiterhin ist aus US-A-3,547,383 eine Auslösevorrichtung für einen Sicherheitsfallschirm bekannt, der eine elektrische Steuerschaltung enthält, die das Signal eines Drucksensors mit jeweils zwei vorgegebenen Vergleichswerten vergleicht, die zwei relativen Höhen zum Startniveau entsprechen, und die die Sinkgeschwindigkeit zwischen den beiden Vergleichshöhen durch einen Zeitabstandsvergleich mittels eines Zeitgliedes bestimmt und nur bei Vorliegen eines freien Falls zwischen den beiden vorgegebenen Höhen, das heißt, wenn der Hauptfallschirm geschlossen blieb, eine Auslösung des Sicherheitsfallschirms bewirkt. Diese gibt eine Entsperrvorrichtung für einen mechanischen oder detonierbaren Kraftspeicher frei, so daß dieser den Riegel aus endseitigen Ösen der Sicherungsschnur herauszieht, die außerdem durch die Reißleine mit einem Handauslösegriff verbunden sind. Die Ösen sind gewöhnlich durch die Deckklappen des Rucksachs geführt und durch den Riegel gesichert, so daß sie nur unter erheblichem Energieaufwand und mit relativ großer Kraft lösbar sind, so daß der Kraftspeicher sehr groß und schwer ausgeführt sein muß, weswegen häufig auf den Einsatz einer derartigen Vorrichtung verzichtet wird. Besonders nachteilig ist die Verknüpfung der Reißleine mit dem Angriff des Kraftspeichers an dem gleichen Riegel bei dessen etwaigem Blockieren gegen ein Herausziehen keine unabhängige, zusätzliche, sichere Auslösung erbracht wird. Außerdem erfordert die Vorgabe des Startniveaus durch den Benutzer vor einem Start besondere Aufmerksamkeit und die genaue Kenntnis des Startniveaus, wodurch Fehlbedienungen nicht ausgeschlossen sind.

Der Erfindung liegt die Aufgabe zugrunde, eine eingangs beschriebene Auslösevorrichtung, die sich durch einen geringen Platzbedarf und ein geringes Gewicht auszeichnet, derart zu verbessern, daß sie einfach bedienbar ist und sicher arbeitet.

Die Lösung dieser Aufgabe erfolgt durch die im Kennzeichen des Patentanspruchs 1 angegebenen Merkmale. Die Unteransprüche betreffen vorteilhafte Ausgestaltungen der Erfindung.

Durch die Ausgestaltung der Erfindung werden sechs ganz wichtige Eigenschaften erreicht:
Erstens ist die Apparatur in der Lage, die vorgegebene, aus mehreren Parametern bestehende, Auslösebdingung im Falle ihres Eintritts exakt und zweifelsfrei zu erkennen. In der Praxis bedeutet das, daß die Auslösebedingungen so eng durch Beschreibung definiert sind, daß wirklich nur der gewollte Auslösefall Grundlage für die Ausgabe eines Auslösebefehls ist.

Zweitens die Apparatur jeden anderen Zustand und jeden anderen äußeren Einfluß, der nicht die Bedingungen für eine Auslösung beinhaltet, zweifelsfrei als nicht Anlaß für eine Auslösung erkennt.
In der Praxis bedeutet das, daß der Apparat keine Fehlauslösungen vornimmt. Das heißt, daß keine gefährlichen Situationen, in denen oft mehrere Fallschirmspringer oder gar das gesamte Fallschirmspringerabsetzflugzeug gefährdet werden, vorkommen können.

Drittens kann die komplette Apparatur, mit Ausnahme eines Bedienungsknopfes mit Anzeige, wegen der technischen Ausgestaltung des Reservefallschirmöffnungsmechanismusses und wegen seiner Kleinheit innerhalb eines Fallschirmverpakkungssystems untergebracht werden.
Durch diesen Umstand werden äußere Beschädigungsmöglichkeiten weitgehend vermieden und die Akzeptanz der Apparatur beim Benutzer erheblich erhöht, wodurch die Anzahl der tödlichen Unfälle reduziert werden kann.

Viertens braucht die Apparatur nicht vor und nach jedem Absprung einen Bedienvorgang.

In der Praxis ist es nur notwendig, am Beginn eines Sprungtages einmal auf einen Knopf zu drücken.

Fünftens zeigt die Apparatur dem Benutzer mögliche technische Fehler in der Anzeige an. Gleichzeitig wird zur Verhinderung von Fehlauslösungen die Auslösebereitschaft abgeschaltet.
In der Praxis weiß der Benutzer Bescheid, wenn ihm die Sicherheitsfunktion der Apparatur nicht mehr zur Verfügung steht.

Sechstens ist die Bedienvorrichtung in einer narrensicheren Einknopfausführung ausgeführt.
In der Praxis heißt das, daß wegen der Einfachheit und der benutzergeführten Bedienweise Fehlbedienungen weitgehend ausgeschlossen sind.

Ausführungsformen der Erfindung werden anhand der beigefügten Zeichnungen erläutert. Es zeigen:

Figur 1 ein Fallschirmsystem (Sprungfallschirm und Sicherheitsfallschirm) mit teilweise geöffnet dargestelltem Sicherheitsfallschirmrucksack;

Figur 2 eine vorteilhafte Gestaltung der Steuervorrichtung;

Figur 3 eine vorteilhafte Gestaltung der Trennvorrichtung mit pyrotechnischem Energierspeicher;

Figur 4 eine vorteilhafte Gestaltung der Trennvorrichtung mit Federspeicher;

Figur 5 ein Blockschaltbild der Steuervorrichtung;

Meßdiagramme 1 - 5 Diagramme des Verlaufs der gemessenen Höhe vs. Zeit für verschiedene Anringungsorte des Sensors am Fallschirmspringer;

Flußdiagramm 1 ein schematisches Ablaufdiagramm für das Erkennen der Auslösebedingung;

Flußdiagramm 2 ein Ablaufdiagramm für die Bedieneinheit.

Figur 1 zeigt eine Fallschirmkombination mit teilweise geöffnet dargestelltem Sicherheitsfallschirmrucksack. Der obere Rucksack (2) enthält den Sicherheitsfallschirm (3a), der in Notsituationen benutzt wird. Dieser Sicherheitsfallschirm (3a) ist mit dem Hilfsfallschirm (3b) verbunden, zu dessen Entfaltung und Auspressung die Entfaltungsfeder (4) dient. Im gepackten Zustand werden die oberen Klappen des Rucksacks (2) gegen die Federkraft durch eine Sicherungsschnur (21) oder bei manchen Fallschirmverpakkungssystemen auch zwei Sicherungschnüre zugehalten, indem deren endseitigen Ösen (22,23) durch Riegel (24,25) gesperrt sind.

Diese Riegel können durch die Reißleine (26) mit dem Handgriff (27) aus den Ösen (22,23) herausgezogen werden, was jedoch voraussetzt, daß der Springer bei Bewußtsein ist. Die bekannten automatischen Auslösevorrichtungen greifen parallel zur Reißleine an den Riegeln (24,25) an. Die neuartige Vorrichtung, die den Sicherheitsfallschirm zur Entfaltung bringt, ist eine Trennvorrichtung für die Sicherungsschnur (1). Sie ist innerhalb des Rucksackes (2) angeordnet und durch ein Kabel (609) mit der Steuervorrichtung (60) verbunden, die innerhalb oder außerhalb des Rucksacks anzuordnen ist. Die Sicherungsschnur (21) ist so durch entsprechend plazierte Öffnungen in der Trennvorrichtung hindurchgefädelt, daß bei einem Fallschirmverpackungssystem mit zwei Sicherungsschnüren die Schnur (21) im Fall einer einseitigen Entriegelung am Ausfädeln unbehindert ist. Die Anzeige- und Bedienvorrichtung kann über ein eigenes Kabel mit der Steuervorrichtung (60) verbunden sein, so daß sie an einer vorteilhaften Stelle innerhalb oder außerhalb des Rucksacks angebracht werden kann.

Vorteilhafterweise ist die Trennvorrichtung (1) in einem einzigen Gehäuse angeordnet, das zwei Öffnungen (101,102) aufweist, durch die die Sicherungsschnur (21) geführt ist. Obwohl in Figur (1) die Steuervorrichtung (60) separat von der Trennvorrichtung (1) dargestellt ist, kann sie auch zusammen mit der Trennvorrichtung 1 in dem Gehäuse oder an ihrem Gehäuse angeordnet sein.

Der untere Rucksack (10) enthält das Hauptfallschirmsystem. Es ist von bekannter Bauart, und seine Beschreibung wird deshalb hier unterlassen.

Figur 2 zeigt eine bevorzugte Ausführungsform der Steuervorrichtung (60), die, ähnlich der in Figur (1), als eine flache Einheit ausgebildet ist. Auf einer Trägerplatte, die aus Metall oder Kunststoff bestehen kann, sind eine Batterie (613), ein Prozessor (601), eine Auswerteelektronik (605) sowie ein Sensor (603) angeordnet. Ein Kabel (607) ist mit der Bedieneinheit (nicht dargestellt) verbunden, und die Kabel (609,611) sind mit der Trennvorrichtung (1) verbunden. Die einzelnen Verdrahtungen für die verschiedenen Bauteile der Steuervorrichtung (60) sind aus Gründen der Übersichtlichkeit nicht dargestellt. Vorteilhafterweise ist die gesamte Steuereinheit (60) in einem Gehäuse aus Metall bzw. einem Gehäuse mit Mu-Metallschirm angeordnet, um sie gegen elektromagnetische Einflüsse abzuschirmen. Die gesamte Energieversorgung der Steuereinheit (60) erfolgt über die Batterie (613), die vorteilhaft als miniaturisierte Flachbatterie mit hoher Speicherkapazität und geringem Gewicht , z. B. mit Lithium-Mangan, ausgebildet ist.

Der Prozessor (601) besitzt einen elektrisch einschreibbaren Festpeicher zur Ablage der Selbsteichungsdaten, einen Unterspannungsschutz zur Sicherung des elektrisch einschreibbaren Festpeichers sowie eine Eigentätigkeitsüberwachung, die ihm in Störfällen (Höhenstrahlung) automatisch zu korrekter Weiterarbeit veranlaßt.

Die Auswerteelektronik (605) ist vorzugsweise aufgebaut aus einem Absolutdruckmesser mit driftfreiem CMOS-Verstärker, sowie einem CMOS-AD-Wandler hoher Präzision, z. B. 12 Bit Auflösung, wobei die Gesamtschaltung die Temperaturdriften der einzelnen Komponenten kompensiert.

Im Falle einer analogen Auslösevorrichtung werden AD Wandler und Prozessor durch einen Logarithmierer zur Abbildung der Druckdaten auf die barometrische Höhenformel, sowie ein Differenzierglied zur Bestimmung der Fallgeschwindigkeit und einen voreinstellbaren Schmitt-Trigger zur Bestimmung der Auslösehöhe ersetzt, wobei das Auslösesignal dann aus der logischen Und-Verknüpfung von nötiger Fallgeschwindigkeit und Unterschreiten der Auslösehöhe gebildet wird.

In der in Figur 1 schematisch dargestellten Trennvorrichtung (1) ist jeweils eine eigene Trennvorrichtung für jedes der Durchgangslöcher (101,102) vorgesehen. Beide Trennvorrichtungen sind gleich aufgebaut.

In Figur 3 ist als Beispiel die Trennvorrichtung (1) für das Durchgangsloch (101) im Schnitt dargestellt. Die Trennvorrichtung besitzt ein im wesentlichen zylindrisches Gehäuse (109), z. B. aus Metall, das an beiden Stirnseiten verschlossen ist. An einem Ende ist die Durchbohrung (101) für die Sicherungsschnur (21) vorgesehen. Am anderen Ende ist das Kabel (609) von der Steuervorrichtung (60) in die Trennvorrichtung (1) abdichtend eingebracht und mit einer Zündvorrichtung (107) für einen Explosivstoff (105) verbunden.

Zwischen der Durchgangsbohrung und dem Explosivstoff (105) ist ein im wesentlichen zylindrischer Metallbolzen (103) verschiebbar angeordnet, dessen Außendurchmesser dem Innendurchmesser des Gehäuses (109) entspricht und dessen dem Loch (101) zugewandtes Ende als Schneide (111) ausgebildet ist. Die Schneide (111) kann dabei gerade, in Form einer Messerschneide oder in Form einer Ringschneide ausgebildet sein.

In gebrauchsfertigem Zustand ist die Sicherungsschnur durch die Bohrung (101) geführt und der Bolzen (103) in der dargestellten Position. Sobald die Steuervorrichtung das Vorliegen der Auslösebedingung erkennt, betätigt sie über das Kabel (609) die Zündvorrichtung (107), wodurch der Explosivstoff (105) gezündet wird.

Aufgrund der Ausdehnung der Explosionsgase wird der Bolzen (103) in Richtung auf die Bohrung (101) verschoben und durchtrennt auf diese Weise die Sicherungsschnur. Der als Kolben wirkende Bolzen (103) wird im Gehäuse (109) geführt und kommt am linken Ende der Trennvorrichtung zur Ruhe, wobei er aufgrund seiner Formgebung die Bohrung (101) verschließt, so daß keine Explosionsgase austreten können.

Vorzugsweise ist der Bolzen (103) im Gehäuse (109) leicht klemmend eingepaßt, so daß er sich nur bei Auslösung der Explosion bewegen kann.

Figur 4 zeigt eine weitere Ausführungsform für die Trennvorrichtung (1). Bei dieser erfindungsgemäßen Ausführungsform ist in einem Gehäuse eine längsverschieblich geführte Klinge (123) angeordnet. Die Klinge (123) ist durch ein Riegelelement, das in eine Ausnehmung der Klinge (123) eingreift, durch Federn (121) vorgespannt. In dem Gehäuse ist ferner ein Entriegelungsglied (131) angeordnet, das in Längsrichtung des Gehäuses mittels eines Elektromagneten verschiebbar ist und das eine Ausnehmung zur Aufnahme eines Endes des Riegelelementes trägt.

Der Elektromagnet ist über das Kabel (609) mit der Steuervorrichtung (60) verbunden und kann von ihr über ein elektrisches Steuersignal betätigt werden.

Bei Vorliegen der Auslösebedingung verschiebt der Elektromagnet (125) das Entriegelungselement (131) in Figur 4 nach rechts, so daß die Ausnehmung mit dem Riegelelement fluchtet und ein Bewegungsspielraum für das verschiebbare Riegelelement geschaffen wird. Die Enden des Riegelelementes sind, wie abgebildet, abgeschrägt, so daß es von der Federkraft über die entsprechende Ausnehmung in der Klinge (123) in die Ausnehmung des Entriegelungselementes (131) verschoben werden kann und die Klinge (123) entriegelt wird.

Die Klinge (123) kann sich im entriegelten Zustand in Figur 4 nach links bewegen und mit der v-förmig geschliffenen Schneide die Sicherungsschnur durchtrennen. Selbstverständlich ist die Schneidenform nicht auf den V-Schliff beschränkt, sondern sie kann gerade oder schräg angeschliffen sein.

Meßdiagramme 1-5 zeigen beispielhaft vier graphische Darstellungen des Druckverlaufs vs. Zeit für vier verschiedene Anordnungen für den Sensor, wobei in
Diagramm 1 der Sensor innerhalb des Rucksacks,
Diagramm 2 der Sensor außerhalb des Rucksacks auf dem Rucksack,
Diagramm 3 der Sensor auf der Brustseite des Springers,
Diagramm 4 der Sensor am Handgelenk
angeordnet ist. Diagramm 5 entspricht der Anordnung von Diagramm 1, wobei allerdings während des Sprungs Salti durchgeführt wurden.

Insbesondere aus Diagramm 5 ist der zwischen den markierten Punkten (P5, P6) sich dokumentierende Einfluß von Drehbewegungen des Springers in der Freifallphase auf die momentane Meßgenauigkeit der barometrischen Höhe ersichtlich. Es ist vorteilhaft vorgesehen, mathematische Glättungsmethoden zur genauen Bestimmung der momentanen Höhe anzuwenden.

In Zusammenhang mit dem unterschiedlichen Sensorort gemäß Diagramm 2-4 wird die angestrebte Genauigkeit für eine Sicherheitsauslösung ebenfalls durch Anwendung von Glättungsmethoden auf die Druckmeßwerte erreicht.

Darüber hinaus ist es besonders vorteilhaft, den Sensor innerhalb des Rucksackes anzuordnen, da, wie insbesondere aus den Diagrammen 1 und 5 ersichtlich ist, sich für die Meßkurve ein relativ glatter Verlauf ergibt. Dieses Verhalten kann bei der Meßdatenverarbeitung berücksichtigt werden, indem z. B. Zeitkonstanten für die Glättung etc. entsprechend gewählt werden können. Ferner kann der Meßprozessor so betrieben werden, daß er die für Salti oder Rollen charakteristischen Druckschwankungen erkennen kann und deren Auswirkung weitgehend eliminiert.
Insbesondere wird die dynamische Druckänderung zu Beginn des Freifalles, die zwischen den gezeichneten Meßpunkten (P1,P2) auftritt, und die entsprechende Druckänderung zu Beginn des Schwebens am Fallschirm, die zwischen den markierten Meßpunkten (P3,P4) auftritt, korrigierend berücksichtigt und die wahre Höhe - strichpunktiert gezeichnet - stets errechnet.

Flußdiagramm 1 zeigt ein prinzipielles Ablaufdiagramm für das Erkennen der Auslösebedingung bzw. des Zustandes der Vorrichtung. Ausgehend von der Höhenmessung werden nach der Anwendung math. Glättungs- und Ableitungsalgorithmen die Größen Beschleunigung und Geschwindigkeit berechnet.

Deren Zeitverläufe in Verbindung mit der momentanen Höhe geben Aufschluß über den Zustand des Gerätes; die Voraussetzung für eine Auslösung ist nicht nur ein plötzliches Unterschreiten der Auslösehöhe, sondern eine vorgegebene Vorgeschichte von Zustandsänderungen, wodurch Fehlauslösungen wirksam vermieden werden können.

Einer möglichen Auslösung muß grundsätzlich ein Höhenanstieg von mindestens 400 Metern während einer Maximalzeit von drei Stunden vorausgegangen sein. Ferner muß der Ausstieg aus der Maschine anhand des dabei auftretenden Drucksprunges durch die dynamische Druckkomponente sowie die einsetzende Freifallbeschleunigung erkannt sein.

Weiterhin muß eine charakteristische Gleichgewichtsfreifallgeschwindigkeit von min. 150 km/h in der durch die Erdbeschleunigung und den mittleren Luftwiderstand bestimmten Zeit von ca. 8 Sekunden erreicht werden. Nur wenn sämtliche vorgenannten Bedingungen vom Gerät aus den Druckmessungen erkannt sind, erfolgt eine Auslösung bei Unterschreiten der Auslösehöhe mit gleichzeitiger Freifallgeschwindigkeit. Fehlen Teilbedingungen (z.B. weil die Beschleunigungsphase durch verrauschte Daten nicht hinlänglich ausgeprägt war), erfolgt eine Auslösung korreliert zur Ausstiegshöhe, indem diese oberhalb von 400 Metern mit der durchschnittlichen Steiggeschwindigkeit von Transportflugzeugen erreicht werden mußte und über diese Höhendistanz abwärts Freifallgeschwindigkeit gemessen wurde.

Grundsätzlich wird die Auslösebereitschaft abgebrochen, wenn die Minimum-Freifallgeschwindigkeit nach Schirmöffnung unterschritten wird. Allerdings bleibt die Meßbereitschaft des Gerätes bestehen, um einen möglichen Abwurf des Hauptfallschirmes zu erkennen und nach obigem Muster wieder in Auslösebereitschaft zu gehen. Bei Unterschreiten der Auslösehöhe ohne Auslösebedingung wird die Auslösebereitschaft grundsätzlich gesperrt und erst durch einen neuen Höhenanstieg nach obigem Muster entsperrt.

Figur 5 zeigt das Prinzipschaltbild der Steuereinrichtung.

Der gesamte Prozeß wird von einer Zentralprozessoreinheit (206) gesteuert, wobei die Stromversorgung (207) für die gesamte Einheit von einer Batterie (208) sichergestellt wird. In dem Ausführungsbeispiel werden die Daten des Drucksensors (200) in einem Verstärker (202) verstärkt und einem Analog-Digital-Wandler (204) zugeführt. Die digitalisierten Werte werden in der Prozessorheinheit (206) entsprechend des Meßprogrammes analysiert. Bei Vorliegen der Auslösebedingung werden über die Kabel (609,611) die Trennvorrichtungen aktiviert.

Zur Stromersparnis schaltet die Zentralprozessoreinheit während Warte- und Auswertezeit die Stromversorgung des Druckmessers, Verstärkers und AD-Wandlers mit einem steuerbaren Schalter (214) ab.
Dem AD-Wandler (204) werden außer dem Luftdrucksignal das Signal eines Temperatursensors (220) und die Batteriespannung über einen steuerbaren Meßmultiplexer (215) zugeführt. Diese Signale werden periodisch abgefragt und zur Korrektur der Drucksensorscharakteristik und der Errechnung der Höhenwerte aus den Luftdruckwerten berücksichtigt. Außerdem wird die Batteriespannung auf Unter-schreitung einer Mindestspannung laufend überwacht, und bei Erreichen der Mindesspannung wird eine Alarmmeldung ausgelöst.

Gemäß Flußdiagramm 2 wird im praktischen Einsatz vor dem Flug am Startplatz das Gerät in einem Tastenerkennungsschritt (#1) durch einen Tastendruck eingeschaltet. Während der Benutzer noch den Finger auf der Taste hält, führt das Gerät

a) einen Selbsttest (#2) und

b) eine Eichung (#3) durch, indem es den herrschenden Umgebungsdruck aufnimmt und ihn, und somit die in dem Moment über NN bestehende geodätische Höhe, zur Basishöhe - im weiteren Null-Höhe genannt - für die Folgezeit macht.

Die erfolgreiche Ausführung beider Operationen zeigt das Gerät in einem Anzeigeschritt (#4) dem Benutzer an, indem es auf einem vierstelligen LC-Display mit Vorzeichen; das Bedienteil besteht aus einem Taster, dem genannten Display und der aufgeführten Bedienanleitung; vier Nullen - für 0-Höhe gesetzt - anzeigt. Diese vier Nullen bleiben für 5 Sekunden sichtbar, während der Benutzer seinen Tastendruck abbricht und damit im Normalfall alle Bedienung durchgeführt hat, was in einem Tastenanalyseschritt (#5) ermittelt wird.

Der Sonderfall ist gegeben, wenn der Bediener an einem anderen Ort, mit einer Landehöhe abspringen möchte, die nicht gleich der Starthöhe ist. In dem Fall hält er die Taste über die 5 Sekunden hinaus gedrückt, was ebenfalls im Tastenanalyseschritt (#5) festgestellt wird und zu einer fortlaufenden Zählung und auf dem Display sichtbar werdenden Zahlen, die in Schrittabständen von - 2000 bis + 2000 gezeigt werden, führt, aus denen der bediener seine Landehöhendifferenz im Verhältnis zur Starthöhe herauszusuchen und durch Loslassen der Taste zur danach geltenden Null-Höhe zu machen, was in einem Speicherschritt (#6) erfolgt.

Nach Durchführung des beschriebenen Vorganges, und zwar für den Normalfall oder für den Sonderfall, ist der Apparat im Auswerte-Betrieb (#7) und justiert. Ein Laufzeitüberwachungsteilprogramm (#8) schaltet nach einer Laufzeit von 14 Stunden zur Batterieersparnis automatisch ab. Um dem Apparat während dieser Zeit neue Befehle (Landehöhen) einzugeben, muß das Gerät über die Taste neu gestartet werden. Diese ist jedoch gegen Zufallsbetätigung gesperrt, indem in einem Tastenkontrollteilprogramm (#9) nach einmaligem Betätigen durch ein Blinkteilprogramm (#10) auf dem Display ein Blinkrhythmus angezeigt wird, dem durch aktiven Tastendruck über längere Zeit exakt gefolgt werden muß, was ein Rhythmusanalyseprogramm (#11) überprüft und welches gegebenenfalls das Gerät in den Einschaltzustand zurückversetzt.

Anordnung zur Selbsteichung

Der Zusammenhang zwischen gemessenem Druck und relativer Höhe ist durch die barometrische Höhenformel gegeben. Vorteilhaft kann diese Gleichung der bekannten logarithmischen Höhenformel approximiert und abschnittsweise linearisiert werden. Dadurch bleiben jedoch Nichtlinearitäten im Analogteil des elektronischen Apparates unberücksichtigt.
Vorteilhaft können diese Nichtlinearitäten durch eine Selbsteichung des Gerätes bei der Herstellung berücksichtigt werden, indem jedes einzelne Gerät in einer Eichapparatur festgesetzten Druckdifferenzen von ca. 10 mbar ausgesetzt wird, wobei das Gerät die jeweils gemessenen Sensorsignale mit den zugehörigen Höhenwerten, z. B. 100 m, in einem Permanentspeicher, z. B. in einem elektrisch einschreibbaren Festspeicher, ablegt und im späteren Betrieb diese Eichdaten für die Höhenbestimmung benutzt.

Vorteilhaft ist es in einer weiteren Ausführung vorgesehen, daß vom Benutzer über eine Bedienvorrichtung zu wählende Meßwerte oder Vorgabewerte auf die Anzeigevorrichtung laufend ausgegeben werden; dies können z. B. die laufende Höhe über Grund, die Fallgeschwindigkeit, Fallzeit usw. sein. So ist die Vorrichtung auch unabhängig von der Benutzung einer Trennvorrichtung von praktischem Nutzen.

Flußdiagramm 1

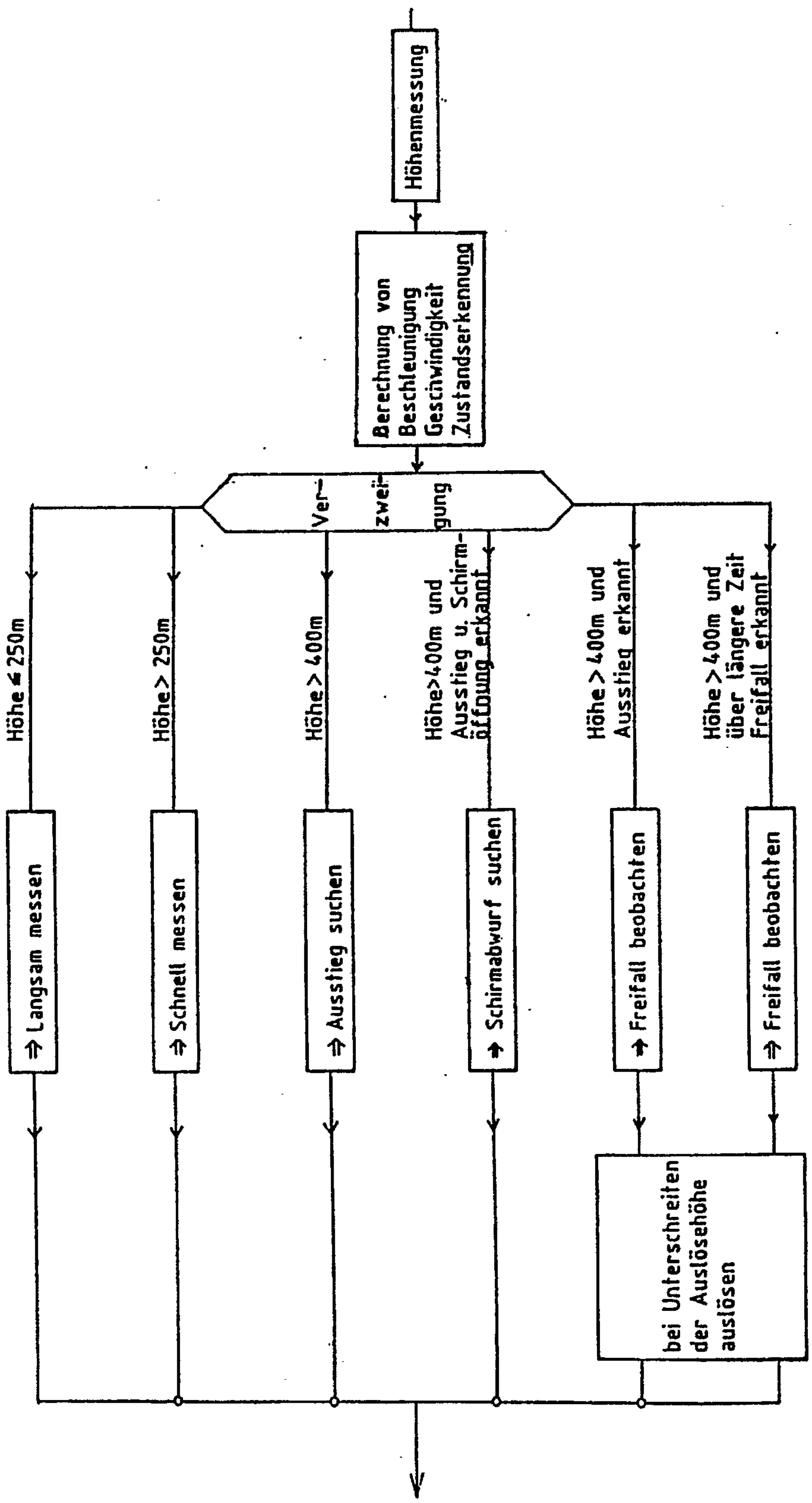

Flußdiagramm 2

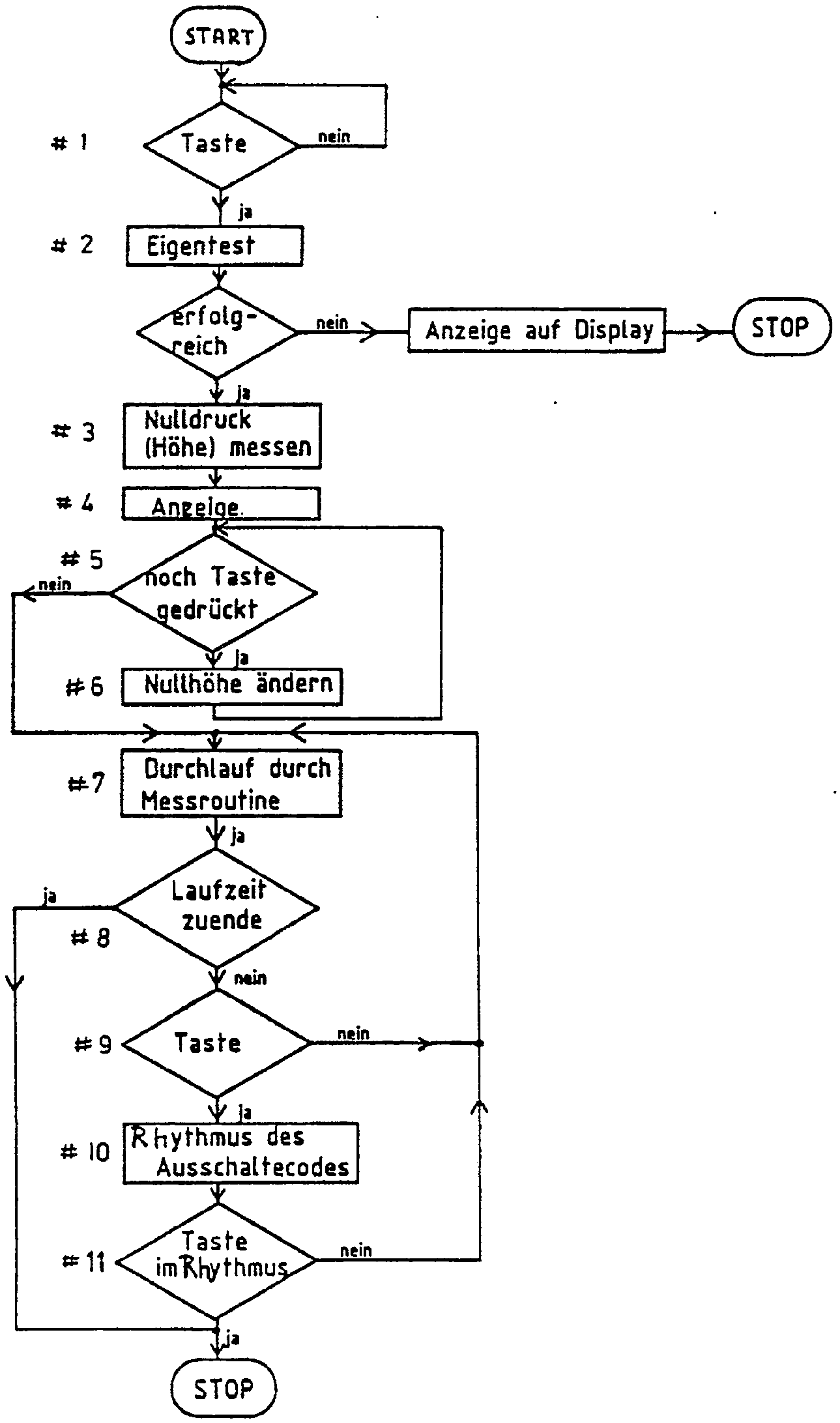


## Patentansprüche

1. Auslösevorrichtung für einen Fallschirm (3A), der im gebrauchsfertigen Zustand in einem Rucksack (2) eingefaltet angeordnet ist und durch eine Sicherungsschnur (21) gegen eine Federspannung einer Entfaltungsfeder (4) zusammengehalten ist und wobei die Sicherungsschnur (21) mit der Auslösevorrichtung verbunden ist, die durch einen barometrischen Höhenmesser bei Erreichen eines voreinstellbaren Luftdrucks ausgelöst wird, wobei in oder an dem Rucksack (2) eine Trennvorrichtung (1) für die Sicherungsschnur (21) angeordnet ist, die durch ein elektrisches Steuersignal von einer batteriegespeisten, elektronischen Steuervorrichtung (60) durch zeitabhängige Auswertung von Luftdrucksignalen eines elektronischen Luftdrucksensors (200) gesteuert auslösbar ist, dadurch gekennzeichnet, daß die Steuervorrichtung (60) aus einem Steuerprozessor (206) besteht, der eingangsseitig mit einer Bedienvorrichtung (210), mit einem Zeitgeber und über einen Analog-Digital-Wandler (204) mit dem Luftdrucksensor (200) verbunden ist, der ausgangsseitig mit einer Anzeigevorrichtung (212) und mit der Trennvorrichtung (1) verbunden ist, daß der Steuerprozessor (206) weiterhin ein Programm zur zeitabhängigen Auswertung der Luftdruckmeßwerte, einer Betätigung der Bedienvorrichtung, einer Betriebsanzeige und zur Ermittlung eines Auslösezeitpunktes, zu dem er ein Auslösesignal an die Trennvorrichtung (1) ausgibt, beinhaltet sowie einen setzbaren Festwertspeicher enthält, der vorgebbare Vergleichs- und Korrekturwerte enthält, und der Steuerprozessor (206) die Bedienvorrichtung (210) periodisch abfragt und auf deren Anfangsbetätigung hin einen Bodendruckwert des Drucksensors (200) mißt und speichert und daraus das Bodenniveau errechnet, speichert und zur Anzeige (212) ausgibt und auf eine weitere Betätigung der Bedienvorrichtung (210) hin, abhängig von deren Dauer, eine relative Höhenangabe zur Anzeige (212) ausgibt und daraus einen vorgegebenen Vergleichsdruck errechnet und abspeichert und danach fortlaufend den Drucksensor (200) abfragt und aus dem zeitlichen Druckverlauf einen geglätteten, mittleren Druckverlauf bestimmt und diesen mit einem vorgegebenen Vergleichswert vergleicht, der eine Druckabfallgeschwindigkeit bei Sinkgeschwindigkeit eines Körpers im freien Fall in der entsprechenden Höhe nahe kommt, und bei deren Überschreiten er eine Zeitermittlung und einen laufenden Vergleich mit einer Fallzeitvorgabe startet, bei deren Erreichen der Steuerprozessor (206) durch weitere Vergleiche von in dichter zeitlicher Folge ermittelten Druckwerten das Fortbestehen einer Sinkgeschwindigkeit im freien Fall prüft, in welchem Fall er das Auslösesignal abgibt, und daß der Steuerprozessor (206) nach der Ermittlung des freien Falls aus dem Vergleich der Druckabfallgeschwindigkeit mit dem Vergleichswert fortlaufend den mittleren Druckverlauf mit dem gespeicherten Vergleichsdruck vergleicht und bei dessen Erreichen durch weitere Vergleiche von in dichter Folge ermittelten Druckwerten das Fortbestehen des freien Falls überprüft, in welchem Fall er das Auslösesignal abgibt.

2. Auslösevorrichtung nach Anspruch 1, dadurch gekennzeichnet, daß dem Analog-Digital-Wandler (204) ein Eingangsmultiplexer (215) vorgeschaltet ist, dessen Steuereingang von dem Steuerprozessor (206) programmzustandsabhängig steuerbar ist und dessen Eingänge mit dem Drucksensor (200), einem Temperatursensor (220) und mit einer Spannungsversorgungsleitung verbunden sind, und daß der Steuerprozessor (206) nach der Anfangsbetätigung der Bedienvorrichtung (210) einen Bodentemperaturwert des Temperatursensors (220) mißt und aus diesem Bodentemperaturwert und dem Bodendruckwert das Bodenniveau errechnet, zur Anzeigevorrichtung (212) ausgibt und speichert.

3. Auslösevorrichtung nach Anspruch 1 oder 2, dadurch gekennzeichnet, daß der Steuerprozessor (206) bei einer dritten Betätigung der Bedienvorrichtung (210) abhängig von deren Dauer die Fallzeitvorgabe ermittelt, auf die Anzeige (212) ausgibt und abspeichert.

4. Auslösevorrichtung nach Anspruch 3, dadurch gekennzeichnet, daß der Steuerprozessor (206) programmgemäß nach der Anfangsbetätigung der Betätigungsvorrichtung (210) die Druck- und Temperatursensorensignale auf Einhaltung vorgegebener Grenzwerte prüft und die Batteriespannung durch Umschaltung des Multiplexers (215) auf die Spannungsversorgungsleitung mißt und prüft und, sofern alle vorgegebenen Toleranzgrenzen eingehalten und alle Mindestwerte überschritten sind, eine Betriebsbereitschaft auf der Ausgabevorrichtung (212) signalisiert.

5. Auslösevorrichtung nach Anspruch 9 dadurch gekennzeichnet, daß der Steuerprozessor (206) programmgemäß die Luftdruckmessungen bei der Auswertung laufend mit einer quasi gleichzeitigen Temperatursensor-Signalauswertung sowohl bezüglich einer Drucksensor-Temperturabhängigkeit als bezüglich der barometrischen Höhenformel korrigiert und dann weiterverarbeitet.

6. Auslösevorrichtung nach einem der vorstehenden Ansprüche, dadurch gekennzeichnet, daß der Steuerprozessor (206) die Luftdruckmessungen in enger zeitlicher Folge, z.B. mit 10 ms Abstand, ausführt und jeweils in einer Folge von z.B. 25 Messungen, über einen längeren Zeitraum, z.B. von 250 ms, mittelt und glättet und diese geglätteten Druckwerte einer Detektion und demgemäßen Korrektur von beim freien Fall auftretenden dynamischen Druckabweichungen unterwirft und die so korrigierten Druckwerte zum jeweiligen Druckvergleich und zum Vergleich mit dem Vergleichswert der Druckabfallgeschwindigkeit nutzt sowie in Höhenwerte umrechnet und mit einem Höhenvergleichssignal jeweils vergleicht, bei dessen Unterschreitung er das Auslösesignal abgibt.

7. Auslösevorrichtung nach Anspruch 1, dadurch gekennzeichnet, daß die Trennvorrichtung (1) eine Schervorrichtung ist, die aus mindestens einem mit einer Federkraft belasteten Klinge (123) besteht, die durch eine elektromagnetisch betätigbare Riegelvorrichtung (131, 125) in einer ersten Stellung außerhalb einer Durchführungsöffnung (102) in der Trennvorrichtung für die Sicherungsschnur (21) gehalten ist und die nach Betätigung der Riegelvorrichtung (131 , 125) in eine zweite Stellung durch die Federkraft verbracht wird, in der die Klinge (123) die Durchführungsöffnung (102) abdeckt.

8. Auslösevorrichtung nach Anspruch 1, dadurch gekennzeichnet, daß die Trennvorrichtung (1) eine Schervorrichtung (103, 105, 109, 111 ) ist, die aus einer durch eine Zündkapsel (107) elektrisch zündbaren Explosivladung (105) besteht, durch die ein in einem Gehäuse (109) gegen eine Hemmkraft verschieblich gelagerter Kolben (103), der ein Trennmesser (111 ) trägt, verschiebbar ist, so daß das Trennmesser (111 ) die Sicherungsschnur (21), die durch eine durchgehende Öffnung (101) des Zylindergehäuses (109) hindurchgeführt ist, bei einer explosivbedingten Trennmesserverschiebung durchtrennt, wobei die Öffnung (101) durch den Kolben (103) verschlossen wird.

## Claims

1. Release device for a parachute (3A), which when ready for use is arranged, folded, in a rucksack (2) and held together by a safety cord (21) against the spring tension of an unfolding spring (4) and whereby the safety cord (21) is connected to the release device, which is triggered via a barometric alitmeter when a preset air pressure is reached, whereby in or on the rucksack (2) a separating device (1) is fitted for the safety cord (21), whose release can be controlled by an electric control signal from a battery-powered, electronic control device (60) through the timed evaluation of air pressure signals from an electronic pressure sensor (200 ), characterised by the fact that the control device (60) comprises a control processor (206), which is connected on the input side with an operating device (210), with a timer and via an analog-digital converter (204) with a pressure sensor (200) and which on the output side is connected with a display device (212) and with the separating device (1), and also by the fact that the control processor (206) also contains a program for the time-related evaluation of air pressure readings, of activation of the operating device and of a drive display and for the calculation of a release time, at which it emits a release signal to the separating device (1) and which also holds an adjustable fixed value memory containing pre-settable comparative and correction values, and where the control processor (206) interrogates the operating device (210) periodically and measures a ground pressure reading from the pressure sensor (200) on its initial activation and stores this reading and calculates from it the ground level, stores it and emits it to the display (212) and on further activation of the operating device (210), dependent on its duration, emits a relative height reading on the display (212) and from that calculates a preset comparative pressure and stores it, and then continues to interrogate the pressure sensor (200) and calculates from the timed pressure pattern an adjusted mean pressure pattern and compares it with a preset comparative value, which approximates to the pressure loss speed in the dropping speed of a body in free fall at the corresponding height, and when the latter is exceeded it starts a time calculation and a running comparison with a preset falling time, so that when this is reached the control processor (206) checks the continuing free fall speed through a series of pressure values measured in rapid succession, and if this is confirmed it gives the release signal, and further characterised by the fact that the control processor (206), after deducing the free fall from the comparison of the pressure drop speed with the comparative value, continuously compares the mean pressure pattern with the stored comparative pressure and when the latter is reached it checks the continuation of the free fall through further comparisons with pressure readings measured in rapid succession and in this case it gives the release signal.

2. Release device as per claim 1, characterised by the fact that the analog-digital converter (204) is preceded by an input multiplexer (215), whose control input can be controlled by the control processor in function of the program status and whose inputs are connected with the pressure sensor (200), a temperature sensor (220) and a power supply lead, and also by the fact that the control processor (206) measures a ground temperature from the temperature sensor after the initial activation of the operating device (210) and from this temperature reading and the ground pressure reading calculates the ground level, outputs it on the display (212) and stores it.

3. Release device as per claim 1 or 2, characterised by the fact that on the third activation of the operating device (210) the control processor (206) calculates the fall time values in function of its duration, outputs them on the display (212) and stores them.

4. Release device as per claim 3, characterised by the fact that the control processor (206) is programmed to check the pressure and temperature sensor signals for agreement with preset limit values after the initial activation of the activation device (210) and measures the battery voltage through switching the multiplexer (215) to the power supply lead and, when all the preset tolerances are met and all the values are above the minimum, signals readinesss for operation on the output device (212).

5. Release device as per claim 1, characterised by the fact that the control processor (206) is programmed to continuously correct the air pressure measurements on evaluation against an almost simultaneous temperature sensor signal evaluation both in terms of pressure sensor temperature dependence and in terms of the barometric height formula and then processes them further.

6. Release device as per one of the above claims, characterised by the fact that the control processor (206) makes the air pressure measurements in rapid succession, e.g. at 10 ms intervals and takes the average of a sequence of e.g. 25 measurements over a longer interval e.g. 250 ms, and rounds it off and subjects these rounded values to detection and corresponding correction of the dynamic pressure deviations occurring in free fall and uses these corrected pressure values for the respective pressure comparison and for comparison with the comparative value of the pressure drop speed, and also converts them into height values and correspondingly compares them with a height comparison signal, so that when the value falls below this the release signal is given.

7. Release device as per claim 1, characterised by the fact that the separating device (1) is a scissor device which comprises at least one blade with a spring load (123), which is held by an electromagnetically activated locking device (131, 125) in a first position outside an insertion aperture (102) in the separating device for the safety cord (21) and which, after activation of the locking device (131, 125), is moved to a second position by the force of the spring, where the blade (123) covers the insertion aperture (102).

8. Release device as per claim 1, characterised by the fact that the separating device (1) is a scissor device (103, 105, 109, 111) comprising an explosive charge (105) which can be electrically detonated via a detonation capsule (107), through which a piston (103), adjustably bearing-mounted in a casing (109) against an inhibiting force and carrying a separating knife (111), can be displaced, so that the separating knife (111) cuts the safety cord (21) which is fed via an opening (101) through the cylinder housing (109) if the separating knife is displaced by explosion, whereby the opening (101) is closed by the piston (103).

## Revendications

1. Dispositif de largage pour un parachute (3A), qui, à l'état prêt à l'usage, est disposé, plié, dans un sac à dos (2) et maintenu par une corde de sécurité (21) contre une tension de ressort d'un ressort de déploiement (4), la corde de sécurité (21) étant reliée au dispositif de largage, qui est déclenché par un altimètre barométrique lorsqu'une pression barométrique préréglable est atteinte, un dispositif séparateur (1) pour la corde de sécurité (21), déclenchable par un signal de commande électrique d'un dispositif de commande électronique (60), alimenté par batteries, par évaluation des signaux de pression barométrique d'un palpeur barométrique électronique (200), en fonction du temps, étant monté dans ou sur le sac à dos (2), caractérisé par le fait que le dispositif de commande (60) consiste en un processeur pilote (206), relié, côté entrée, à un dispositif de manoeuvre (210), à une minuterie et, par l'intermédiaire d'un convertisseur analogique-numérique (204), au palpeur barométrique (200), et, côté sortie, à un dispositif d'affichage (212) et au dispositif séparateur (1), et que le processeur de commande (206) comprend, en outre, un programme d'analyse et exploitation, en fonction du temps, des valeurs de pression d'air mesurées, d'un actionnement du dispositif de manoeuvre, d'un affichage de service et de la détermination d'un moment de largage, lors duquel il lance un signal de déclenchement au dispositif séparateur (1), ainsi qu'une mémoire des constantes, comprenant des valeurs comparatives et de correction allouables, et que le processeur pilote (206) interroge périodiquement le dispositif de manoeuvre (210) et, en raison de l'actionnement initial de celui-ci, mesure et mémorise une valeur de pression au sol du palpeur barométrique (200) et calcule, sur cette base, le niveau du sol, le mémorise et le sort à l'affichage (212) et en raison d'un autre actionnement du dispositif de manoeuvre (210) et en fonction de sa durée, met à l'affichage (212) une indication d'altitude relative et calcule, sur cette base, une pression comparative prédéterminée et la mémorise, puis interroge ensuite, en continu, le palpeur barométrique (200) et, sur la base de la loi de pression en fonction du temps, détermine une marche de pression moyenne, égalisée et compare celle-ci avec une valeur comparative allouée, se rapprochant d'une vitesse de chute de pression, compte tenu de la vitesse de descente verticale d'un corps en chute libre à la hauteur correspondante, et, lors de son dépassement, il démarre une détection de temps et une comparaison continue avec une allocation de temps de chute, celle-ci atteinte, le processeur de commande (206) vérifie, par d'autres comparaisons de valeurs de pression détectées à brefs intervalles, la continuation d'une vitesse de descente verticale en chute libre et, dans ce cas, lance le signal de déclenchement, et que le processeur de commande (206), après la détection de la chute libre sur la base de la comparaison de la vitesse de chute de pression avec la valeur comparative, compare, en continu, la marche de pression moyenne avec la pression comparative mémorisée et, lorsque celle-ci est atteinte, contrôle, par d'autres comparaisons de valeurs de pression détectées à brefs intervalles, la continuation de la chute libre et, dans ce cas, lance le signal de déclenchement.

2. Dispositif de largage selon revendication 1, caractérisé par le fait qu' en amont du convertisseur analogique-numérique (204), un multiplexeur d'entrée (215) est connecté, dont l'entrée de commande est commandée par un processeur de commande (206) en fonction du programme et dont les entrées sont reliées au palpeur barométrique (200), à un palpeur de température (220) et à une conduite d'alimentation en tension et que le processeur de commande (206), après actionnement initial du dispositif de manoeuvre (210), mesure une valeur de température du sol du palpeur de température (220) et, sur la base de cette valeur de température du sol et de la valeur de pression au sol, calcule le niveau du sol, l'indique à l'affichage (212) et le mémorise.

3. Dispositif de largage selon revendication 1 ou 2, caractérisé par le fait que le processeur de commande (206), lors d'un troisième actionnement du dispositif de manoeuvre (210) et en fonction de la durée de celui-ci, détermine l'allocation du temps de chute, l'indique à l'affichage (212) et la mémorise.

4. Dispositif de largage selon revendication 3, caractérisé par le fait que le processeur de commande (206) contrôle, conformément au programme, après l'actionnement initial du dispositif de manoeuvre (210), les signaux des palpeurs de pression et de température quant au respect des valeurs limites prédéterminées et mesure et vérifie la tension de batterie par commutation du multiplexeur (215) sur la ligne d'alimentation en courant et, pour autant que toutes les limites de tolérances allouées soient respectées et toutes les valeurs minimales surpassées, signale au dispositif de sortie (212) un état de service.

5. Dispositif de largage selon revendication 1, caractérisé par le fait que le processeur pilote (206) corrige, continuellement, lors de l'évaluation, conformément au programme, les mesures de pression barométrique avec une analyse pratiquement simultanée des signaux du détecteur de temps, aussi bien en ce qui concerne une dépendance pression-température qu en ce qui concerne la formule d'altitude barométrique, et poursuit alors le traitement.

6. Dispositif de largage selon l'une des revendications précédentes, caractérisé par le fait que le processeur pilote (206) effectue les mesures de pression barométrique en ordre chronologique à brefs intervalles, par exemple. de 10 ms, et fait la moyenne et égalise respectivement, en une suite de 25 mesurages par.exemple, pendant un laps de temps plus grand, par exemple. 250 ms, et soumet ces valeurs égalisées à une détection et à une correction adéquate des divergences de pression dynamiques se produisant en chute libre, et utilise les valeurs de pression ainsi corrigées aux fins d'une comparaison de pression respective et de comparaison avec la valeur comparative de la vitesse de chute de pression, les converties en valeurs d'alititude et les compare respectivement avec un signal comparatif d'altitude, lors du souspassement duquel, il lance un signal de déclenchement.

7. Dispositif de largage selon revendication 1, caractérisé par le fait que le dispositif séparateur (1) consiste en un dispositif de cisaillement, comprenant au moins une lame (123) chargée par ressort, maintenue, par un verrouillage (131, 125) actionnable électromagnétiquement, dans une première position, en dehors d'un l'orifice de passage (102) pratiqué dans le dispositif séparateur (1) pour la corde de sécurité (21), et qui, après actionnement du verrouillage (131, 125), est amenée, par la force de ressort, dans une seconde position, dans laquelle la lame (123) recouvre l'orifice de passage.

8. Dispositif de largage selon revendication 1, caractérisé par le fait que le dispositif séparateur (1) est un dispositif de cisaillement (103, 105, 109, 111), comprenant une charge explosive (105) amorçable électriquement à l'aide d'une capsule-amorce (107), charge explosive par laquelle un piston, logé, décalable par rapport à une force enrayante, dans un carter (109) et portait une lame de couteau (111), peut être déplacé de sorte que la lame de couteau (111) tranche, lors de son déplacement dû à l'explosion, la corde de sécurité (21), passant par un orifice (101) pratiqué à travers le carter du cylindre (109), le piston (103) fermant l'orifice (101).

Fig. 1

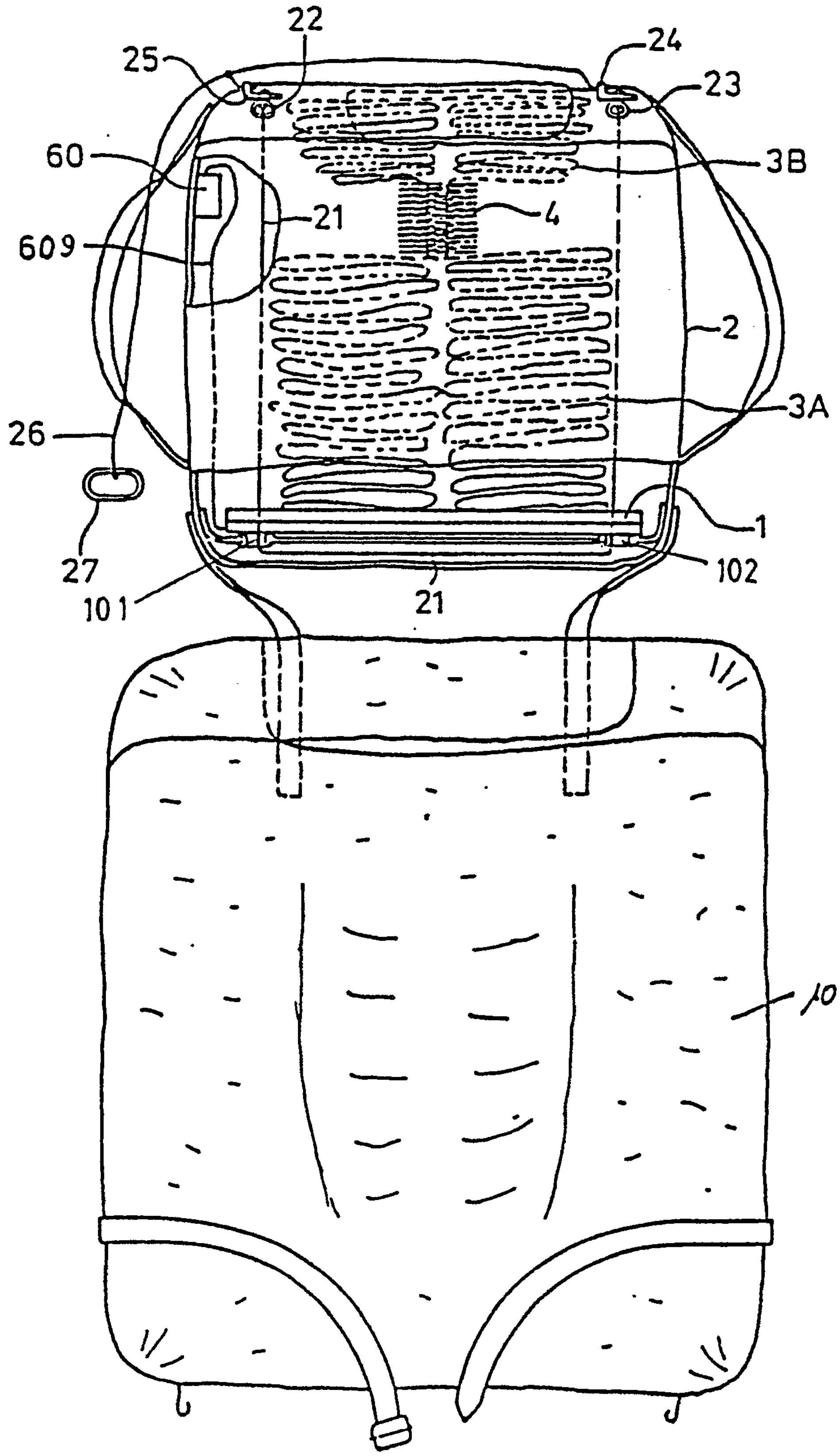

Fig. 2

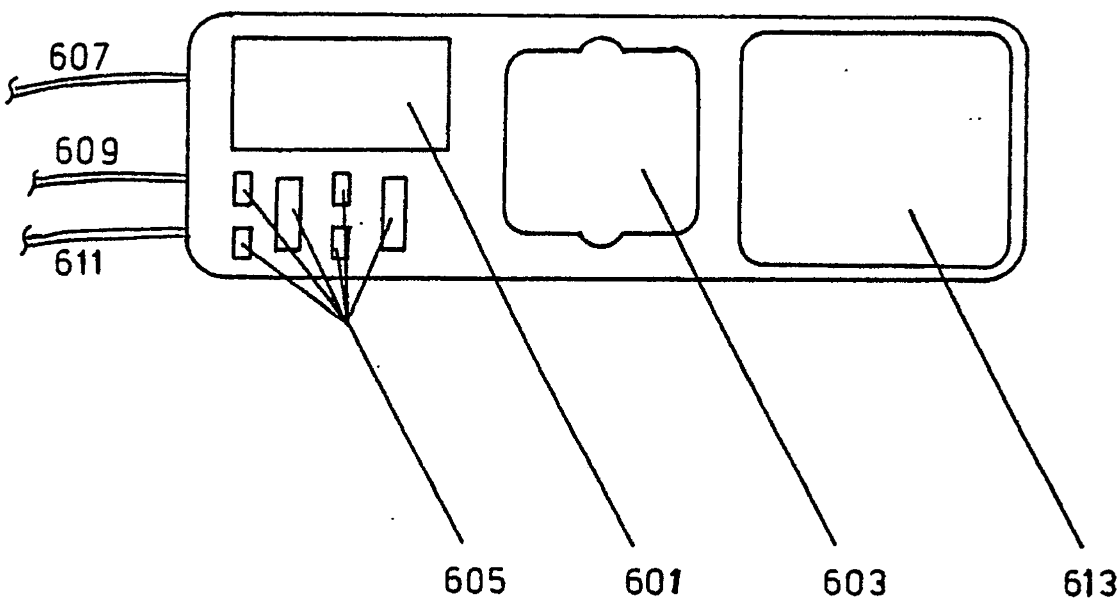

Fig. 3

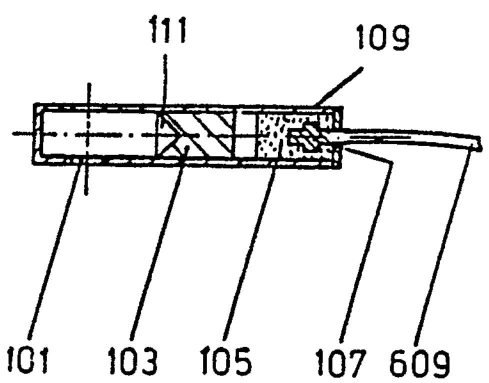


Fig. 4

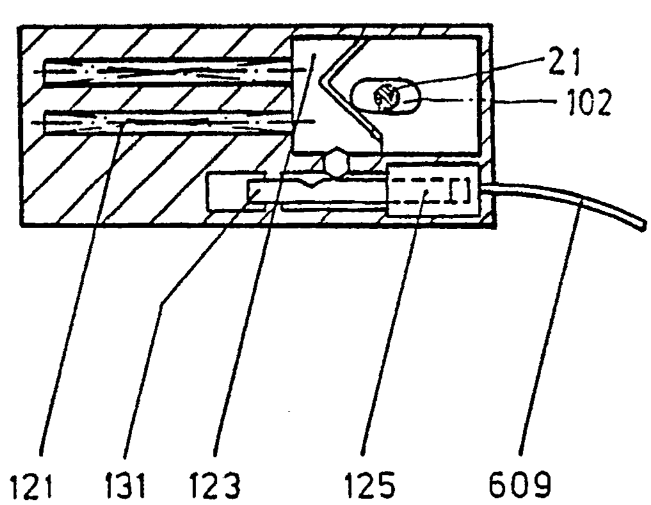

Fig. 5

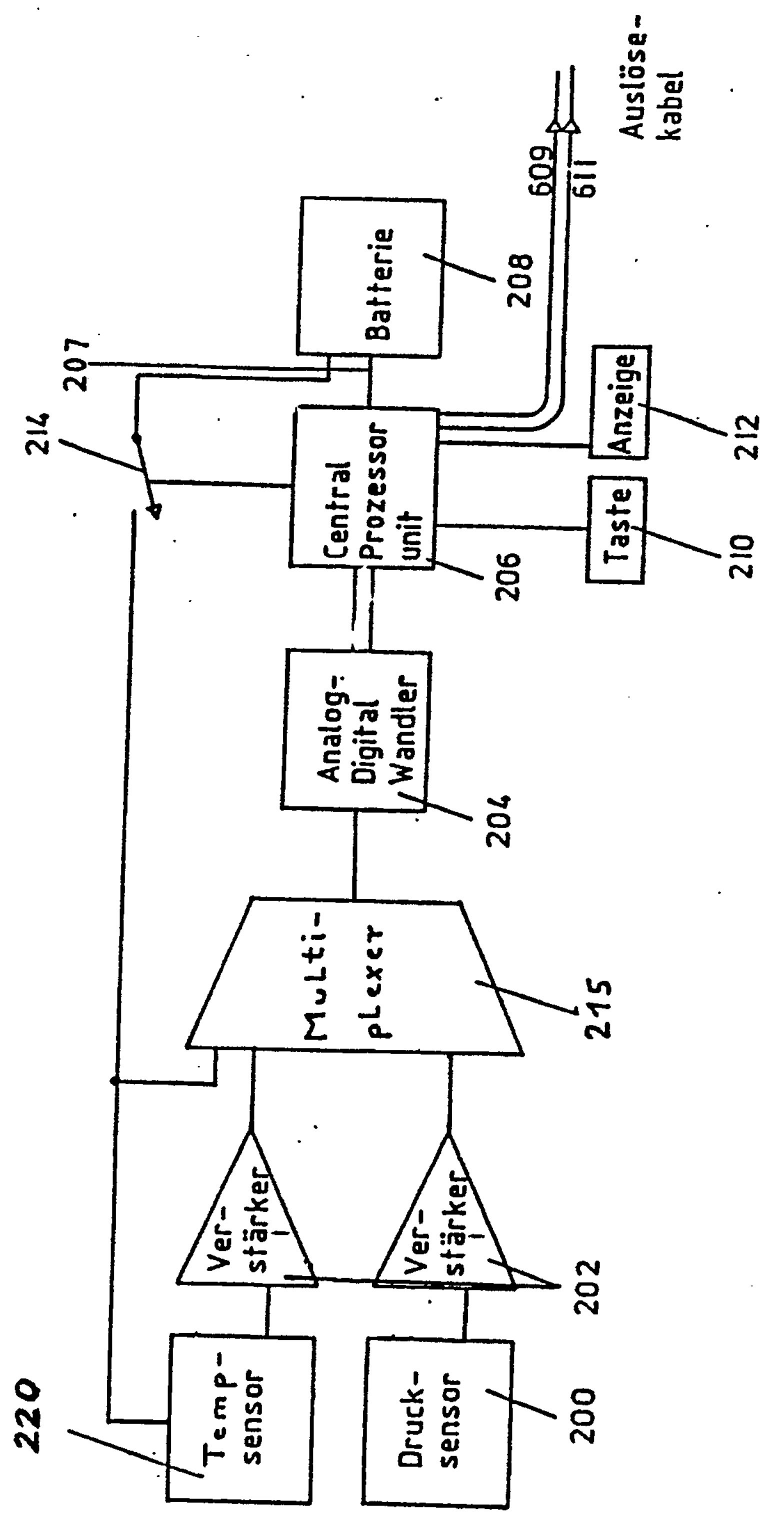
Temp-sensor
220
Druck-sensor
200
Ver-stärker
Ver-stärker
202
Multi-plexer
215
Analog-Digital Wandler
204
Central Prozessor unit
206
214
207
Batterie
208
609
611
Auslöse-kabel
Anzeige
212
Taste
210

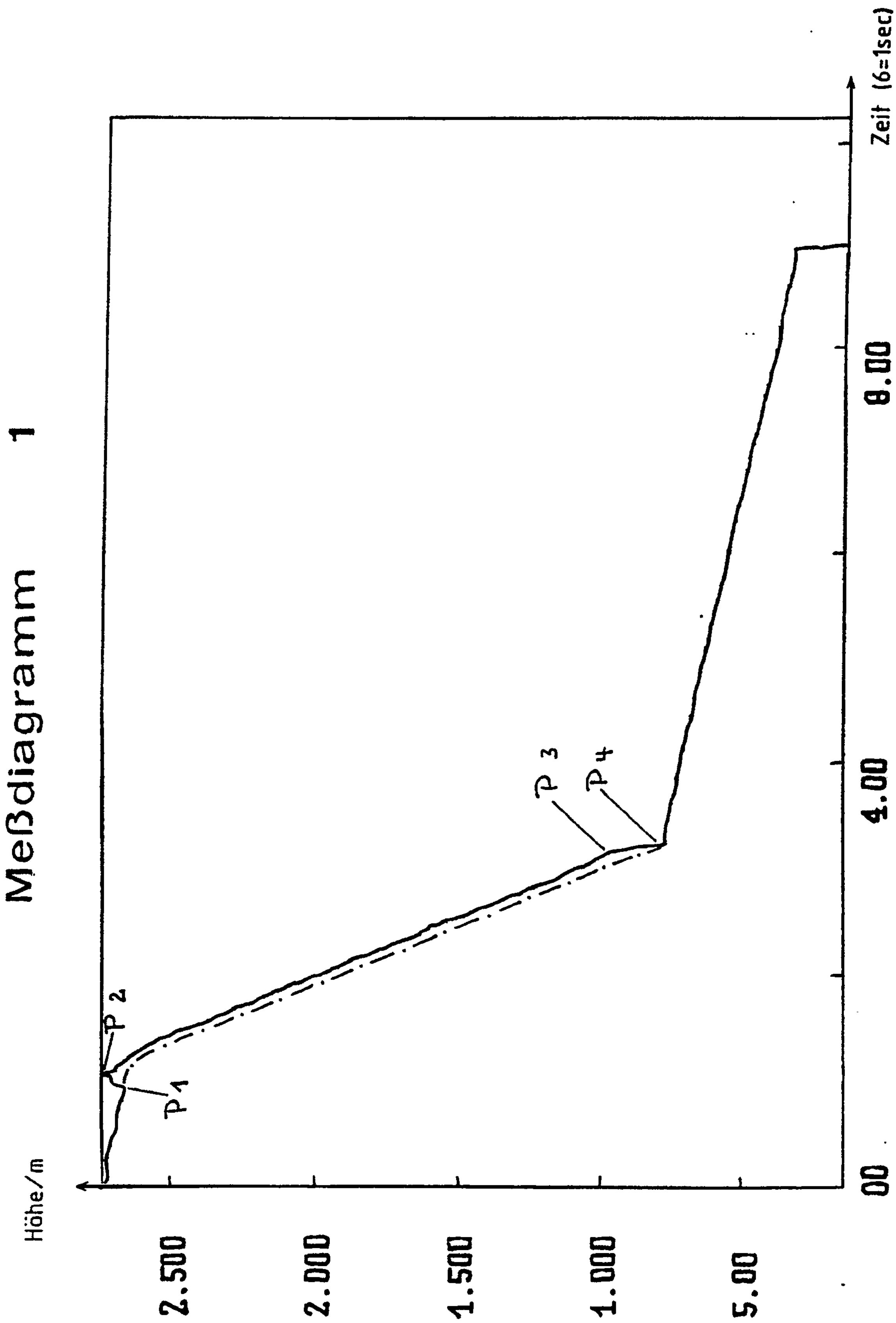
Meßdiagramm 1
Höhe/m
2.500
2.000
1.500
1.000
5.00
00
4.00
8.00
Zeit (6=1sec)
P 1
P 2
P 3
P 4

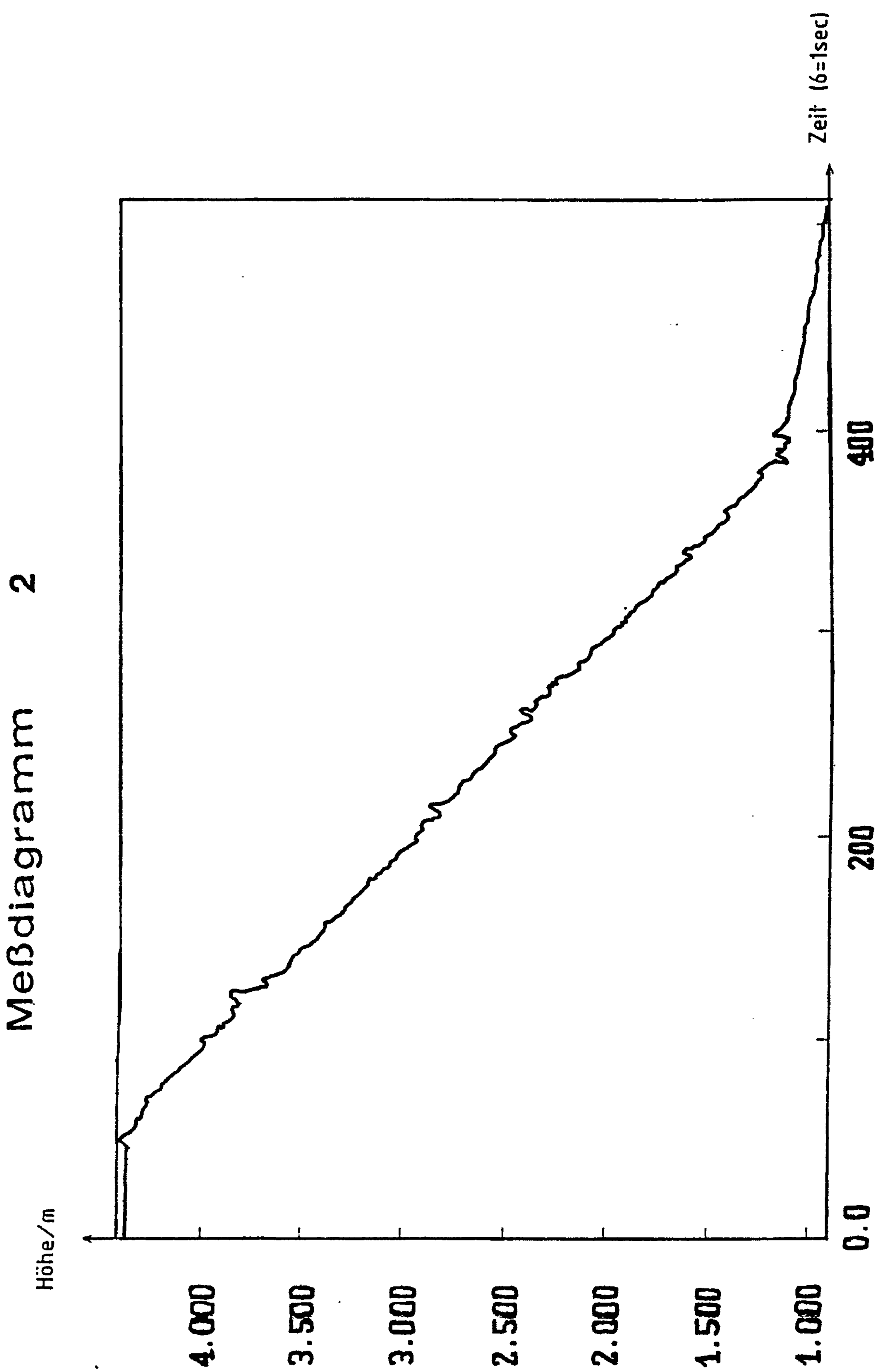
Meßdiagramm 2
Höhe/m
4.000
3.500
3.000
2.500
2.000
1.500
1.000
0.0
200
400
Zeit (6=1sec)

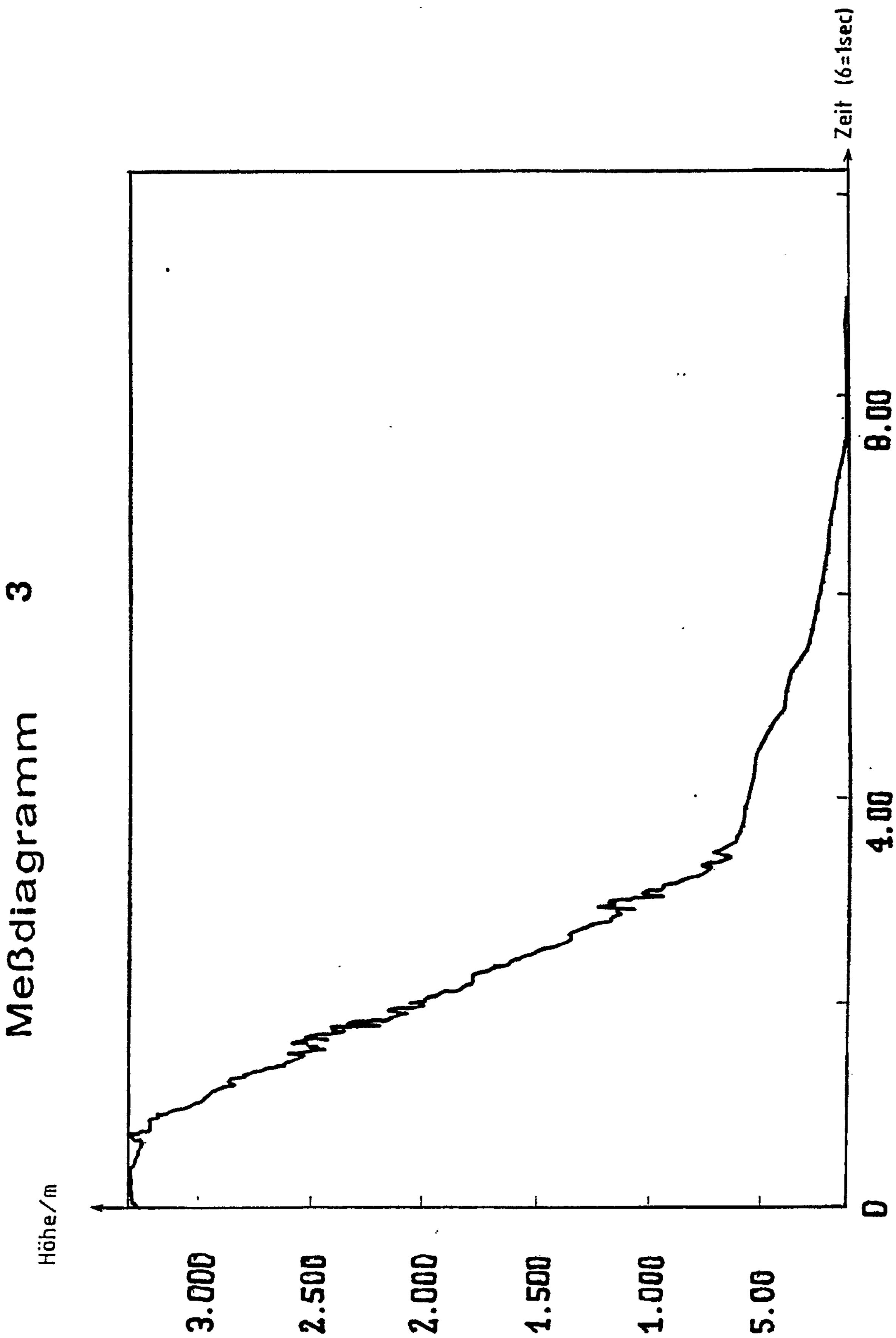
Meßdiagramm 3
Höhe/m
3.000
2.500
2.000
1.500
1.000
5.00
0
4.00
8.00
Zeit (6=1sec)

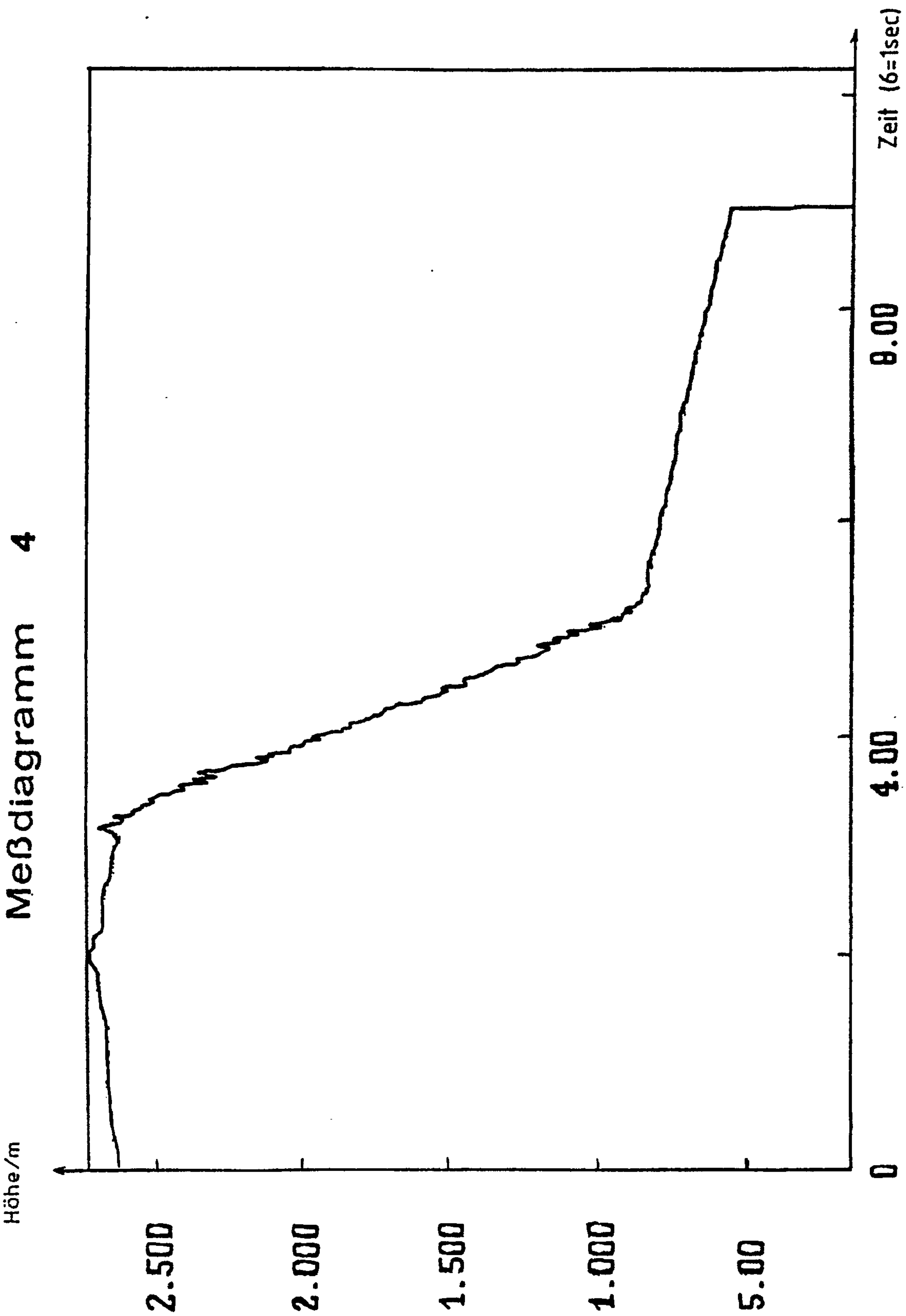
Meßdiagramm 4
Höhe/m
2.500
2.000
1.500
1.000
5.00
Zeit (6=1sec)
0
4.00
8.00

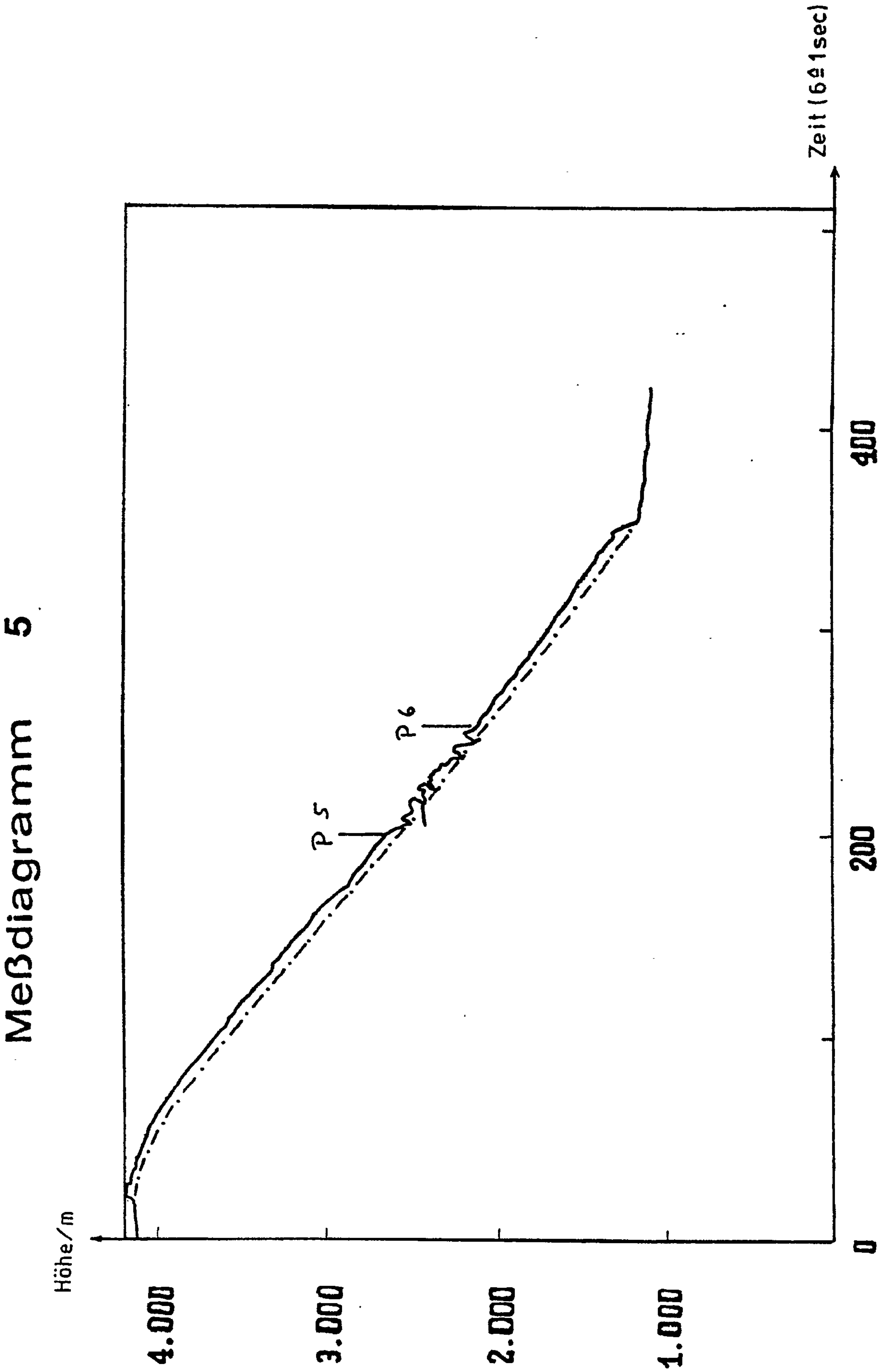
Meßdiagramm 5
Höhe/m
4.000
3.000
2.000
1.000
Zeit (6≙1sec)
0
200
400
P5
P6